# EUROPÄISCHE PATENTANMELDUNG

(11) **EP 2 674 615 A2**
(43) Veröffentlichungstag der Anmeldung: **18.12.2013**
(21) Anmeldenummer: 13171665.6
(22) Anmeldetag: 12.06.2013
(51) Int. Cl.: F03D 1/06

(54) **Windkraftanlage**

(30) Priorität: 14.06.2012 DE 102012209991
(71) Anmelder: Aktiebolaget SKF, 41550 Göteborg (SE)
(72) Erfinder: Beck, Jens, 97688 Bad Kissingen (DE); Götz, Johannes, 97520 Röthlein (DE); Menig, Fred, 97717 Sulzthal (DE); Baumann, Michael, Livingston, EH53 0SD (GB)
(74) Vertreter: Schonecke, Mitja

(57) **Zusammenfassung**

Die Erfindung betrifft eine Windkraftanlage (1), umfassend einen drehbar angeordneten Rotor (2), an dem eine Anzahl Flügel (3, 4, 5) angeordnet sind. Um die Empfindlichkeit der Windkraftanlage gegen eine schwankende Windströmung zu vermindern, sieht die Erfindung vor, dass an oder in der Windkraftanlage (1) mindestens eine Schwungmasse (6) angeordnet ist, die mit radialem Abstand (a) zur Drehachse (A) des Rotors (2) angeordnet werden kann, wobei an der Schwungmasse (6) Mittel (7) angreifen, mit denen die Schwungmasse (6) in Richtung der Drehachse (A) gezogen wird.

## Beschreibung

Die Erfindung betrifft eine Windkraftanlage, umfassend einen drehbar angeordneten Rotor, an dem eine Anzahl Flügel angeordnet sind.

Derartige Windkraftanlagen sind im Stand der Technik hinlänglich bekannt. Der Rotor der Anlage mit an diesem angeordneten Flügeln ist relativ zu einem Aufnahmegehäuse zumeist mittels einer Wälzlagerung gelagert, was eine reibungsarme und stabile Lagerung des Rotors samt Flügel sicherstellt.

An verschiedenen Standorten, die für eine Windkraftanlage vorgesehen sind, werden teilweise sehr unregelmäßig Windverhältnisse beobachtet. Vor allem kleinere Windkraftanlagen reagieren auf solch unregelmäßige Windverhältnisse negativ. Weht kein kontinuierlicher Wind und treten Böen auf, hat dies Turbulenzen zur Folge, die sich negativ auf das Betriebsverhalten der Windenergieanlage auswirken, Insbesondere kann die Anlage auf kurze Windimpulse infolge von Windböen aufgrund der Massenträgheit des Rotors nicht schnell genug reagieren, d. h. nur schwer anlaufen bzw. beschleunigen.

Andererseits gilt im Falle dessen, dass die Anlage bereits läuft und für einen kurzen Zeitraum kein Wind verfügbar ist, dass eine kleine Anlage schnell abbremst. Anschließend, wenn wieder Wind aufkommt, muss wieder ein träger Anlauf der Anlage erfolgen.

Dies führt nachteilig dazu, dass die im Wind enthaltene Energie nicht optimal von der Windkraftanlage, insbesondere im Falle einer kleinen Anlage, genutzt werden kann. Bislang wird versucht, dem genannten Effekt dadurch entgegen zu wirken, dass die Flügel in ihrer Anstellung variiert werden (Pitch-Regelung), um so sowohl bei horizontalen als auch bei vertikalen Anlagen die im Wind enthaltene Energie besser ausnutzen und die Anlage an die jeweiligen Windverhältnisse anpassen zu können. Allerdings ist dies vorrichtungstechnisch sehr aufwändig und somit teuer. Hinzu kommt, dass das System relativ träge reagiert.

Der Erfindung liegt die Aufgabe zugrunde, die Empfindlichkeit einer Windkraftanlage gegen eine schwankende Windströmung, insbesondere im Falle einer kleinen Anlage, in einfacher Weise und somit kostengünstig zu vermindern. Weiterhin soll die Anlage in den Stand gesetzt werden, direkter und somit schneller zu reagieren.

Die Lösung dieser Aufgabe durch die Erfindung ist dadurch gekennzeichnet, dass an oder in der Windkraftanlage mindestens eine Schwungmasse angeordnet ist, die mit radialem Abstand zur Drehachse des Rotors angeordnet werden kann, wobei an der Schwungmasse Mittel angreifen, mit denen die Schwungmasse in Richtung der Drehachse gezogen wird.

Bevorzugt ist die Schwungmasse im Inneren eines Flügels angeordnet. Aber auch eine Anordnung im Bereich einer Verstrebung der Flügel ist möglich. Generell möglich ist es auch, dass die Schwungmasse und die Mittel zur Verschiebung in Richtung der Drehachse als separates Teil bzw. separate Teile vorgesehen wird bzw. werden, das bzw. die an der Windkraftanlage angeordnet wird bzw. werden.

Die Mittel zum Ziehen der Schwungmasse in Richtung der Drehachse können ein Federelement sein. Dabei kann es sich um eine mechanische Feder (vorzugsweise bestehend aus Gummi oder aus Stahl) oder um eine pneumatische oder hydraulische Feder handeln.

Die Mittel zum Ziehen der Schwungmasse in Richtung der Drehachse können auch durch einen Linearmotor realisiert werden.

Möglich ist es auch, dass die Mittel zum Ziehen der Schwungmasse in Richtung der Drehachse einen Seilzug und Umlenkrollen umfassen.

Eine weitere Alternative sieht vor, dass die Mittel zum Ziehen der Schwungmasse in Richtung der Drehachse eine schiefe Ebene sind, die im Inneren des Flügels oder in einer Verstrebung für dieselben ausgebildet ist, indem der Flügel oder die Verstrebung bei vertikaler Anordnung der Drehachse zur Horizontalen um einen Winkel, z. B. zwischen 10° und 45°, geneigt am Rotor angeordnet ist.

Die Schwungmasse kann ferner mit Dämpfmitteln in Verbindung stehen, die die Bewegung der Schwungmasse in Richtung der Drehachse dämpfen. Besagte Dämpfmittel können durch ein zähes Medium gebildet werden, das die Schwungmasse zumindest teilweise umgibt; hierfür kommt besonders bevorzugt als zähes Medium eine Flüssigkeit, insbesondere Öl, in Frage.

Die Erfindung stellt also auf das Prinzip ab, dass eine Schwungmasse bzw. ein Schwungrad mit variabler Drehmasse eingesetzt wird. Die Schwungmasse ist in der Lage, kinetische Energie - vorliegend Rotationsenergie - zu speichern.

Der Nachteil einer Schwungmasse bzw. eines Schwungrades, die bzw. das sich grundsätzlich zur Vergleichmäßigung der Drehung des Rotors anbietet, ist, dass die Drehmasse zunächst beschleunigt werden muss. Das würde insbesondere eine kleine Windkraftanlage sehr träge machen. Daher ist erfindungsgemäß vorgesehen, dass die Massenträgheit der Schwungmasse - bezogen auf die Drehachse des Rotors der Windkraftanlage - variabel ist. Demgemäß wird der Abstand zwischen der Schwungmasse und der Drehachse verändert; d. h. besagter Abstand wird variabel ausgestaltet.

Bei der Drehzahl Null befindet sich die Schwungmasse im oder nahe beim Drehzentrum, d. h. an der bzw. nahe bei der Drehachse des Rotors. Hierdurch ist ein schnelles Anlaufen des Rotors möglich, da die Drehmasse noch gering ist und nicht durch die Schwungmasse (wesentlich) erhöht wird. Mit steigender Drehzahl des Rotors der Windkraftanlage nimmt (sobald sich die Schwungmasse außerhalb der Drehachse des Rotors befindet) die Zentrifugalkraft auf die Schwungmasse zu, wodurch diese radial vom Rotor weg nach außen wandert; der Abstand der Schwungmasse von der Drehachse des Rotors erhöht sich daher und somit die Massenträgheit des Rotors samt Flügeln. Denkbar ist es auch, dass der Abstand der Schwungmasse von der Drehachse aktiv verändert wird, beispielsweise über einen Linearmotor, und somit unabhängig von der Zentrifugalkraft.

Weht nun kurzzeitig kein Wind, verringert sich die Drehzahl des Rotors allmählich, wodurch auch die Zentrifugalkraft auf die Schwungmasse reduziert wird. Die noch mit Abstand von der Drehachse liegende Schwungmasse verlangsamt den Drehzahlabfall des Rotors. Setzt jetzt der Wind böenartig wieder ein, ist der Rotor mit den Flügeln noch auf einer gewissen Drehzahl, so dass eine Windböe voll ausgenutzt werden kann. Setzt indes der Wind nicht mehr ein, vermindert sich die Rotordrehzahl weiter. Die Schwungmasse wird bei folglich weiter abfallender Rotordrehzahl mit einer definierten Rückstellkraft in Richtung Drehachse beaufschlagt, d. h. entgegen der Richtung der Zentrifugalkraft und die Schwungmasse somit in Richtung Drehachse zurückgezogen. Die Drehmassenträgheit des Rotors vermindert sich entsprechend, was es begünstigt, den Rotor beim nächsten Wind wieder hinreichend dynamisch anlaufen zu lassen.

Die Rückstell- bzw. Rückzugskraft kann durch verschiedene Arten von Elementen aufgebracht werden. Möglich sind zunächst kostengünstige mechanische Federn aus Stahl, aus Kunststoff oder aus Gummi. Alternativ ist auch ein Linearmotor für die Bewegung der Schwungmasse in radiale Richtung zur Drehachse möglich. Ebenfalls möglich ist ein pneumatisches oder hydraulisches Element, wobei beispielsweise mit Unterdruck gearbeitet wird, um die Schwungmasse zurückzuholen.

Um die Rückzugsbewegung der Schwungmasse besser zu kontrollieren und insbesondere nicht zu schnell erfolgen zu lassen, ist es möglich, ein Dämpfungselement vorzusehen. Die Schwungmasse kann hierzu beispielsweise von einer zähen Flüssigkeit umgeben werden. Möglich ist auch ein anderes umgebendes Medium wie Sand oder Kies. Es kann auch eine Art Stoßdämpfer zum Einsatz kommen, der die Bewegung der Schwungmasse von der Drehachse weg nicht behindert, allerdings die Bewegung der Schwungmasse zurück zur Drehachse hin dämpft.

Als Schwungmasse sind verschiedene Massen einsetzbar. Bevorzugt sind Festkörper (beispielsweise auch Sand oder Kies, die ein gewisses Fließverhalten haben), aber auch Flüssigkeiten und Gase sind als Schwungmassen nicht generell ausgeschlossen.

Die Schwungmassen können in den Flügeln angeordnet werden, was bevorzugt ist; sie können auch in den Verstrebungen hin zu den Flügeln integriert werden. Wie bereits erwähnt, können für die Schwungmassen auch separate Bauteile vorgesehen werden.

Bei Vertikalanlagen (die Drehachse des Rotors ist vertikal angeordnet) ergibt sich die Möglichkeit, die Rückholkraft für die Schwungmasse hin zur Drehachse durch eine winkelige Anstellung der Flügel oder von Verstrebungen für dieselben zu realisieren. Dadurch wird eine schiefe Ebene im Flügel oder in der Verstrebung realisiert, auf der die Schwungmasse infolge der Hangabtriebskraft in Richtung Drehachse bewegt wird.

In vorteilhafter Weise laufen mit der erfindungsgemäßen Ausgestaltung auch kleine Windenergieanlagen bei böigen Windverhältnissen verbessert konstant und ohne größere Drehzahlschwankungen. Dennoch wird vorteilhaft ein schneller Anlauf der Anlage gewährleistet; das Auslaufen des Rotors bei Flaute erfolgt indes stark verzögert. Demgemäß steigt der Nutzungsgrad der im Wind enthaltenen Energie an. Hierdurch werden vor allem kleine Windenergieanlagen wirtschaftlicher. Somit können auch Standorte für Windenergieanlagen interessant werden, die aufgrund der Windverhältnisse ansonsten problematisch sind.

Der vorliegende Erfindungsvorschlag eignet sich also in besonderer Weise für kleinere Windkraftanlagen; er kann aber auch bei größeren Anlagen eingesetzt werden.

In der Zeichnung sind Ausführungsbeispiele der Erfindung dargestellt. Es zeigen:
- Fig. 1: eine Vorderansicht einer Windkraftanlage mit drei Flügeln, wobei ein Flügel teilweise geschnitten dargestellt ist,
- Fig. 2: schematisch eine Schwungmasse mit Mitteln zum Ziehen derselben gemäß einer ersten Ausführungsform der Erfindung,
- Fig. 3: schematisch die Schwungmasse mit Mitteln zum Ziehen gemäß einer zweiten Ausführungsform der Erfindung,
- Fig. 4: schematisch die Schwungmasse mit Mitteln zum Ziehen gemäß einer dritten Ausführungsform der Erfindung und

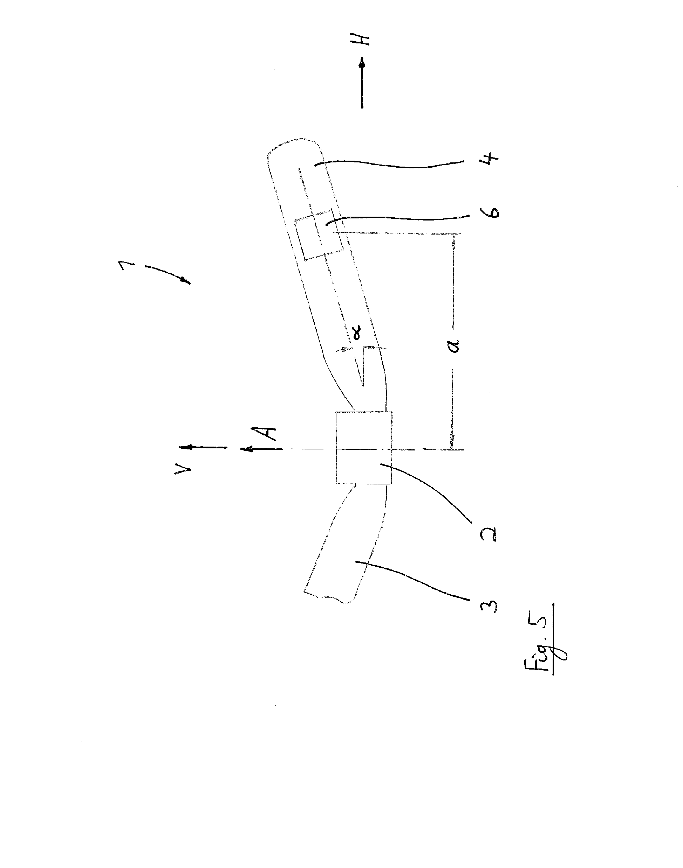

- Fig. 5: die Vorderansicht einer Windkraftanlage gemäß einer zu Fig. 1 alternativen Ausgestaltung.

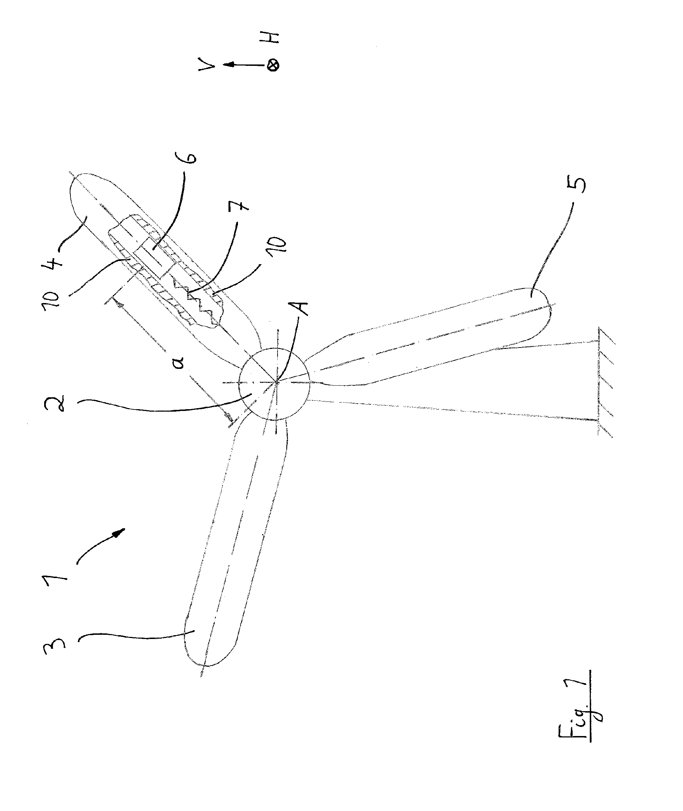

In Fig. 1 ist eine Windkraftanlage 1 zu sehen, die einen Rotor 2 aufweist, an dem drei Flügel 3, 4, 5 angeordnet sind, die sich radial vom Rotor 2 weg erstrecken. Die Drehachse A des Rotors 2 ist horizontal angeordnet; sie steht auf der Zeichenebene senkrecht.

Um die Windkraftanlage 1 gegen unstetigen Wind unempfindlicher zu machen, ist in jedem der Flügel 3, 4, 5 eine Schwungmasse 6 angeordnet, wie es für den Flügel 4 beispielhaft illustriert ist. Die Schwungmasse 6 kann sich in Richtung der Längsachse des Flügels 3, 4, 5 bewegen, wofür eine Führung 10 vorgesehen ist.

Die Schwungmasse 6 weist bei Rotation des Rotors 2 einen radialen Abstand a zur Drehachse A des Rotors 2 auf. Damit erhöht sie die Drehmassenträgheit des Rotors 2. An der Schwungmasse 6 greifen Mittel 7 an, mit denen die Schwungmasse 6 in Richtung der Drehachse A gezogen werden kann. Diese Mittel 7 bestehen vorliegend aus einer Feder, die mit einem Ende nahe des Rotors 2 und mit dem anderen Ende an der Schwungmasse 6 befestigt ist.

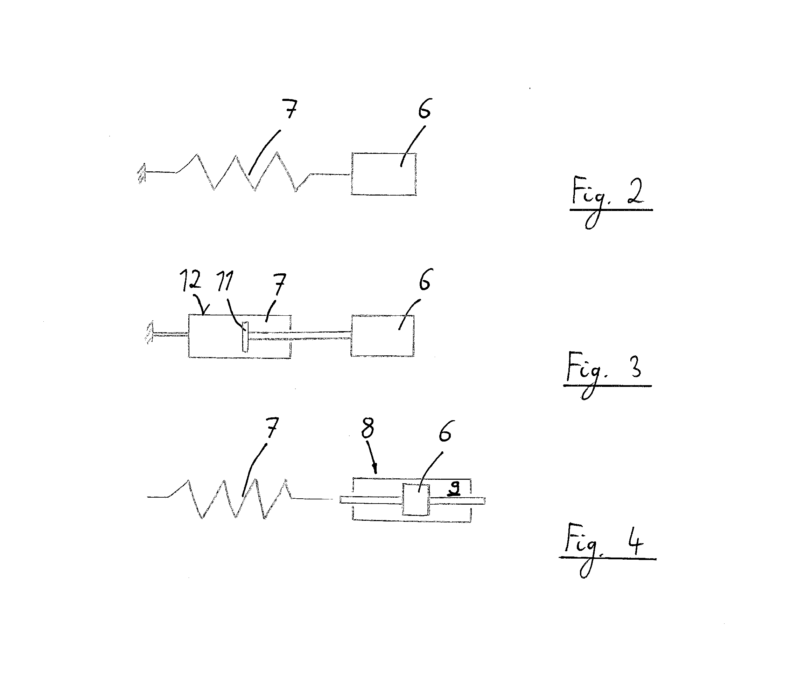

Wie anhand der Figuren 2, 3 und 4 gesehen werden kann, können besagte Mittel 7 zum Zurückholen der Schwungmasse 6 in Richtung Drehachse A verschiedenartig ausgeführt sein.

In Fig. 2 ist der einfachste Fall skizziert. Hier ist die Schwungmasse 6 mit einer mechanischen Feder 7 verbunden.

Bei der Lösung gemäß Fig. 3 ist eine pneumatische Feder vorgesehen, d. h. wird die Schwungmasse 6 infolge der Zentrifugalkraft nach rechts ausgelegt, verschiebt sich ein Kolben 11 in einem Zylinder 12, so dass in einem Bereich des Zylinders ein Unterdruck entsteht, der die Schwungmasse 6 zurückholt, wenn die Zentrifugalkraft auf sie geringer wird.

In Fig. 4 sind ergänzend noch Dämpfmittel 8 dargestellt, die die Bewegung der Schwungmasse 6 dämpfen. Vorliegend sind die Dämpfmittel als zylindrisches Element ausgebildet, das mit einem zähen Medium 9, vorliegend mit Öl, gefüllt ist. Die Bewegung der Schwungmasse 6 wird folglich abgebremst bzw. gedämpft.

In Fig. 4 ist eine weitere alternative Ausgestaltung der Erfindung zu sehen. Hier ist ein Ausschnitt einer Vertikalanlage zu sehen, d. h. die Drehachse A des Rotors 2 steht vertikal (Vertikale V). Die Flügel 6 (oder eine Verstrebung für dieselben) sind unter einem Winkel α am Rotor 2 angeordnet, wie es sich aus Fig. 4 ergibt.

Die Schwungmasse 6 bewegt sich bei steigender Drehzahl des Rotors 2 radial nach außen und bewegt sich auf der durch den Winkel α gebildeten schiefen Ebene aufwärts. Sinkt die Drehzahl des Rotors 2 wieder ab, gleitet die Schwungmasse 6 auf der schiefen Ebene wieder abwärts in Richtung der Drehachse A. Demgemäß wird die effektive Drehmasse des Rotors mit dem gewünschten erläuterten Effekt in Abhängigkeit der Drehzahl des Rotors verändert.

Auch hier kann wieder vorgesehen sein, dass das Volumen, durch das sich die Schwungmasse 6 bewegt, mit einem Medium wie Öl oder Gel gefüllt ist.

### Bezugszeichenliste

- 1: Windkraftanlage
- 2: Rotor
- 3: Flügel
- 4: Flügel
- 5: Flügel
- 6: Schwungmasse
- 7: Mittel zum Ziehen der Schwungmasse (Federelement)
- 8: Dämpfmittel
- 9: zähes Medium (Öl)
- 10: Führung
- 11: Kolben
- 12: Zylinder
- a: Abstand
- A: Drehachse
- H: Horizontale
- V: Vertikale
- α: Winkel

## Patentansprüche

1. Windkraftanlage (1), umfassend einen drehbar angeordneten Rotor (2), an dem eine Anzahl Flügel (3, 4, 5) angeordnet sind,
**dadurch gekennzeichnet, dass**
an oder in der Windkraftanlage (1) mindestens eine Schwungmasse (6) angeordnet ist, die mit radialem Abstand (a) zur Drehachse (A) des Rotors (2) angeordnet werden kann, wobei an der Schwungmasse (6) Mittel (7) angreifen, mit denen die Schwungmasse (6) in Richtung der Drehachse (A) gezogen werden kann.

2. Windkraftanlage nach Anspruch 1, **dadurch gekennzeichnet, dass** die Schwungmasse (6) im Inneren eines Flügels (3, 4, 5) angeordnet ist.

3. Windkraftanlage nach Anspruch 1 oder 2, **dadurch gekennzeichnet, dass** die Mittel (7) zum Ziehen der Schwungmasse (6) in Richtung der Drehachse (A) ein Federelement sind.

4. Windkraftanlage nach Anspruch 3, **dadurch gekennzeichnet, dass** das Federelement eine mechanische Feder ist, vorzugsweise bestehend aus Gummi oder aus Stahl.

5. Windkraftanlage nach Anspruch 3, **dadurch gekennzeichnet, dass** das Federelement eine pneumatische oder hydraulische Feder ist.

6. Windkraftanlage nach Anspruch 1 oder 2, **dadurch gekennzeichnet, dass** die Mittel (7) zum Ziehen der Schwungmasse (6) in Richtung der Drehachse (A) ein Linearmotor sind.

7. Windkraftanlage nach Anspruch 1 oder 2, **dadurch gekennzeichnet, dass** die Mittel (7) zum Ziehen der Schwungmasse (6) in Richtung der Drehachse (A) einen Seilzug und Umlenkrollen umfassen.

8. Windkraftanlage nach Anspruch 1 oder 2, **dadurch gekennzeichnet, dass** die Mittel (7) zum Ziehen der Schwungmasse (6) in Richtung der Drehachse (A) eine schiefe Ebene sind, die im Inneren des Flügels (3, 4, 5) oder in einer Verstrebung für denselben ausgebildet ist, indem der Flügel (3, 4, 5) oder die Verstrebung bei vertikaler Anordnung der Drehachse (A) zur Horizontalen (H) um einen Winkel (α) geneigt am Rotor (2) angeordnet ist.

9. Windkraftanlage nach einem der Ansprüche 1 bis 8, **dadurch gekennzeichnet, dass** die Schwungmasse (6) mit Dämpfmitteln (8) in Verbindung steht, die die Bewegung der Schwungmasse (6) in Richtung der Drehachse (A) dämpfen.

10. Windkraftanlage nach Anspruch 9, **dadurch gekennzeichnet, dass** die Dämpfmittel (8) durch ein zähes Medium (9) gebildet werden, das die Schwungmasse (6) zumindest teilweise umgibt, wobei das zähes Medium vorzugsweise eine Flüssigkeit, insbesondere Öl, ist.
